# EUROPEAN PATENT APPLICATION

(11) **EP 1 921 310 A1**
(43) Date of publication of application: **14.05.2008**
(21) Application number: 07120342.6
(22) Date of filing: 09.11.2007
(51) Int. Cl.: F03D 11/00

(54) **Nacelle of a wind power plant**

(30) Priority: 09.11.2006 FI 20060987
(71) Applicant: Winwind Oy, 00210 Helsinki (FI)
(72) Inventor: Böhmeke, Georg, 00210, Helsinki (FI)
(74) Representative: Helino, Timo Kalervo

(57) **Abstract**

A nacelle of a wind power plant is presented comprising a generator (1), a rotor provided with rotating blades and an adjustment device for the blade angle, a gearbox (2) for changing the rotation speed of the rotor such that it will be suitable for the generator, a cable duct (3) passing through the gearbox and rotating with the rotor, through which cable duct passes a power supply cable (4) for the blade angle adjustment device, and a slip ring unit (5) for connecting the power supply cable rotating with the rotor to the fixed power supply. In accordance with the invention, an air flow is arranged inside the cable duct (3) for cooling the power supply cable (4).

## Description

### FIELD OF THE INVENTION

The invention relates to a nacelle of a wind power plant as defined in the preamble of claim 1.

### BACKGROUND OF THE INVENTION

In wind power plants, the generator is typically connected to the rotor via a gearbox, so that the rotation speed of the slowly rotating rotor can be increased to be suitable for the generator. The rotor pole comprises adjustment systems for the rotor blade angles, the adjustments systems requiring electric power supply in order to function. Thus, the power supply for the blade angle adjustment system is typically realized by cables passing through the gearbox via slip rings. If the generator is coupled to the gearbox, the power supply will be lead through the generator in this case as well.

The problem with the prior art is the warming of the cable which is used. When the cable duct is lead through the gearbox, the cable warms to a relatively high degree due to the temperature of the gearbox and the losses of the cable itself. A typical temperature of the gearbox is 80 to 90°C, such that, adding to that the heat loss of the cable, the cables will have to be sized to endure temperatures of such high degree that the cross-sectional area of the cables must be substantially increased and/or special cables provided with a heat-resistant insulator must be used. Thus, the cabling costs for the blade angle adjustment are a considerable cost item in the nacelle structures.

### OBJECTIVE OF THE INVENTION

The objective of the invention is to eliminate the drawbacks referred to above.

One specific objective of the invention is to disclose a novel construction for use in the nacelle of a wind power plant, enabling the use of the less expensive standard cables which are as thin as possible in the power supply for the blade angle adjustment devices.

### SUMMARY OF THE INVENTION

The nacelle of a wind power plant in accordance with the invention is characterized by what has been presented in claim 1.

The nacelle of a wind power plant in accordance with the invention comprises a generator, a rotor provided with rotating blades and an adjustment device for the blade angle, a gearbox for changing the rotation speed of the rotor to be suitable for the generator, a cable duct passing through the gearbox and rotating with the rotor, through which cable duct passes a power supply cable for the blade angle adjustment device, and a slip ring unit for connecting the power supply cable rotating with the rotor to the fixed power supply. In accordance with the invention, an air flow is arranged inside the cable duct for cooling the power supply cable. The air flow passes inside the cable duct, substantially surrounding the cables inside the duct. Thus, the air flow cools the cables directly, and simultaneously the inner casing of the duct, reducing heat transfer from the duct to the cables.

The construction in accordance with the invention is functional also when the cable duct is arranged to pass through the gearbox and the generator.

Preferably, the air flow inside the cable duct is realized by means of a blower, arranged at a first end of the cable duct or near it, and an outflow opening, arranged at a second end of the duct. In this manner, the cooling air flow can be arranged, in accordance with the invention, to pass in either direction inside the cable duct. However, an embodiment in which the blower is mounted in the gearbox to the side of the rotor, i.e. for example inside the rotor pole, seems more functional and effective. In this manner, the cooling blow will comprise air as cold as possible, which is then blown through the central axis of the gearbox into the inside of the nacelle.

The outflow opening for the cooling air flow that has already become warm is positioned on the rotating duct, either on the outer casing of the duct itself, or a separate sleeve which is concentric with the duct may be joined thereto, in which sleeve the casing comprises one or more outflow openings which open outwards.

Heat transfer from the gearbox into the cable can be further reduced by making the cable duct which is used from suitable heat-insulating material. It is also possible to use a heat-insulating layer, suitable for the application, outside or inside the cable duct.

In one embodiment of the invention, coupled or supported inside the cable duct and extending in the direction of the diameter of the duct is a cable support, which may be a plate, rib or such, to which the cables may be supported or coupled such that they are always positioned at a distance from the inner casing of the cable duct. Thus, a cooling air flow is always maintained between the inner casing of the cable duct and the outer surface of the cables, such that they will not be at any spot in direct heat transfer contact with each other.

The arrangement of the nacelle of a wind power plant in accordance with the invention provides considerable advantages compared to the prior art. Thanks to the cooling in accordance with the invention, simpler, thinner and less expensive cables can be used as power supply cables for the blade angle adjustment device.

### LIST OF FIGURES

In the following section, the invention will be described in detail with the aid of examples, referring to the accompanying drawing, in which
Fig. 1 schematically represents one construction of a nacelle of a wind power plant in accordance with the invention as seen from the side and,
Fig. 2 represents a cross-section of one cable duct construction in accordance with the invention.

### DETAILED DESCRIPTION OF THE INVENTION

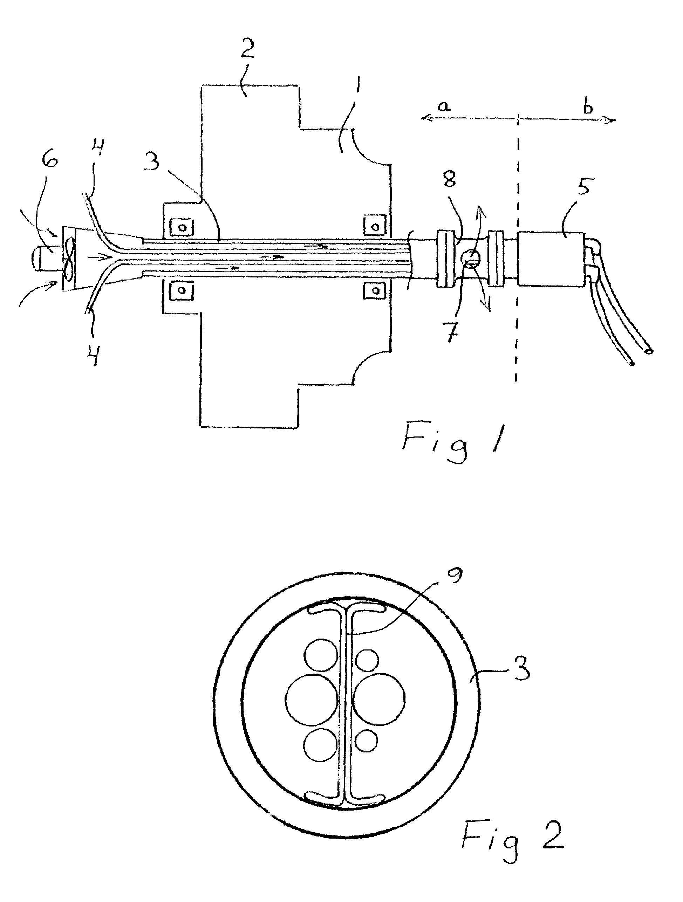

Fig. 1 schematically represents a generator 1 and a gearbox 2 which operate together, the gearbox changing the rotation speed of the rotor (not shown) such that it will be suitable for the generator. The rotor comprises adjustment devices for the rotor blade angles, the power required for the adjustment devices being supplied through power supply cables 4. The cables are led to the rotor pole through a cable duct 3 passing through the center of the gearbox and the generator. At the end opposite to the rotor, the cable duct 3 is connected to a slip ring unit 5, i.e. a fixed structure which enables in a manner known per se power supply from the fixed portion into the rotating portion via the slip rings.

Arranged at the end of the cable duct 3, on the side of the rotor, is a blower 6 which draws the blown air from inside the rotor pole and blows it into the cable duct 3. Near the slip ring unit 5 and coupled to the cable duct 3 is a sleeve-type construction 8 in which the outer casing comprises at least one outflow opening 7 through which the air, blown into the cable duct from the other end, will be able to flow out. Thus, the construction is rotating on the left side of the transverse dashed line (arrow a), and fixed on the right side of the dashed line (arrow b).

During operation of the blower 6, the cooling air flow passes through the cable duct 3, removing, from the gearbox, the generator and the cable itself, heat which is transferring therein, and maintaining the operating conditions of the cable optimal.

In the embodiment of Fig. 2, a cable support 9, i.e. a support structure extending through the diameter of the duct, is placed inside the cable duct 3 throughout the full length of the duct. The cables are then coupled or supported in a suitable manner to the support structure, such that they will not be able to contact the inner casing of the cable duct at any spot. Thus, a cooling air flow is always maintained between the inner casing of the cable duct and the cables themselves. Preferably, the cables are also coupled to the cable support in such manner that they will not be in any direct contact with each other either. Thus, the cooling air flow will be able to surround the cables from each direction in the most effective manner.

The invention is not limited merely to the examples referred to above; instead many variations are possible within the scope of the inventive idea defined by the claims.

## Claims

1. A nacelle of a wind power plant, comprising a generator (1), a rotor provided with rotating blades and an adjustment device for the blade angle, a gearbox (2) for changing the rotation speed of the rotor such that it will be suitable for the generator, a cable duct (3) passing through the gearbox and rotating with the rotor, through which cable duct passes a power supply cable (4) for the blade angle adjustment device, and a slip ring unit (5) for connecting the power supply cable rotating with the rotor to the fixed power supply, **characterized in that** an air flow is arranged inside the cable duct (3) for cooling the power supply cable (4).

2. The nacelle of a wind power plant in accordance with claim 1, **characterized in that** the cable duct (3) is arranged to pass through the gearbox (2) and the generator (1).

3. The nacelle of a wind power plant in accordance with clam 1 or 2, **characterized in that** the first end of the cable duct (3) comprises a blower (6) and the second end comprises an outflow opening (7).

4. The nacelle of a wind power plant in accordance with claim 3, **characterized in that** the blower (6) is positioned in the gearbox on the side of the rotor.

5. The nacelle of a wind power plant in accordance with claim 3 or 4, **characterized in that** the outflow opening (7) is positioned on the casing of the cable duct (3) or of a separate sleeve (8) joined to the duct.

6. The nacelle of a wind power plant in accordance with any one of claims 1 to 5, **characterized in that** the cable duct is made from heat-insulating material.

7. The nacelle of a wind power plant in accordance with any one of claims 1 to 5, **characterized in that** the cable duct comprises a heat insulator surrounding it on the outside or on the inside.

8. The nacelle of a wind power plant in accordance with any one of claims 1 to 7, **characterized in that** the cable duct (3) comprises a cable support (9) to which the cables are supported at a distance from the inner casing of the cable duct.
